# EUROPEAN PATENT APPLICATION

(11) **EP 1 229 526 A2**
(43) Date of publication of application: **07.08.2002**
(21) Application number: 02250640.6
(22) Date of filing: 30.01.2002
(51) Int. Cl.: G11B 7/135

(54) **Optical pickup unit with a rotatable phase difference plate**

(30) Priority: 30.01.2001 JP 2001021094
(71) Applicant: Mitsumi Electric Company Ltd., Chofu-shi Tokyo (JP)
(72) Inventor: Negoro, Kenichi, c/o Mitsumi Electric Co., Ltd., Atsugi-shi, Kanagawa (JP); Kan, Kenji, c/o Mitsumi Electric Co., Ltd., Atsugi-shi, Kanagawa (JP)
(74) Representative: Moir, Michael Christopher

(57) **Abstract**

In an optical pickup unit for converging a laser beam having a predetermined polarization direction produced by a semiconductor laser (LD) on a signal recording face of an optical disc (Disc) through an objective lens (OL), a phase difference plate (PDP) is rotatably disposed before the objective lens around an optical axis. A rotation adjusting mechanism mechanically rotates the phase difference plate around the optical axis by any angle. It is therefore possible to adjust an included angle between a direction of a major axis (K) of a spot and a polarization direction (J) of the laser beam on the signal recording face at any angle.

## Description

### Background of the Invention:

This invention relates to an optical pickup unit, which is contained in an optical disc drive, for recording/reproducing data in/from an optical recording medium such as an optical disc.

In the manner known in the art, an optical pickup unit is a unit which carries out recording (writing) or erasing of information by converging a laser beam produced by a semiconductor laser serving as an optical source on a signal recording face of an optical disc through an objective lens and which carries out reproducing of information by detecting a return beam from the signal recording face by a photodetector serving as optical detecting means.

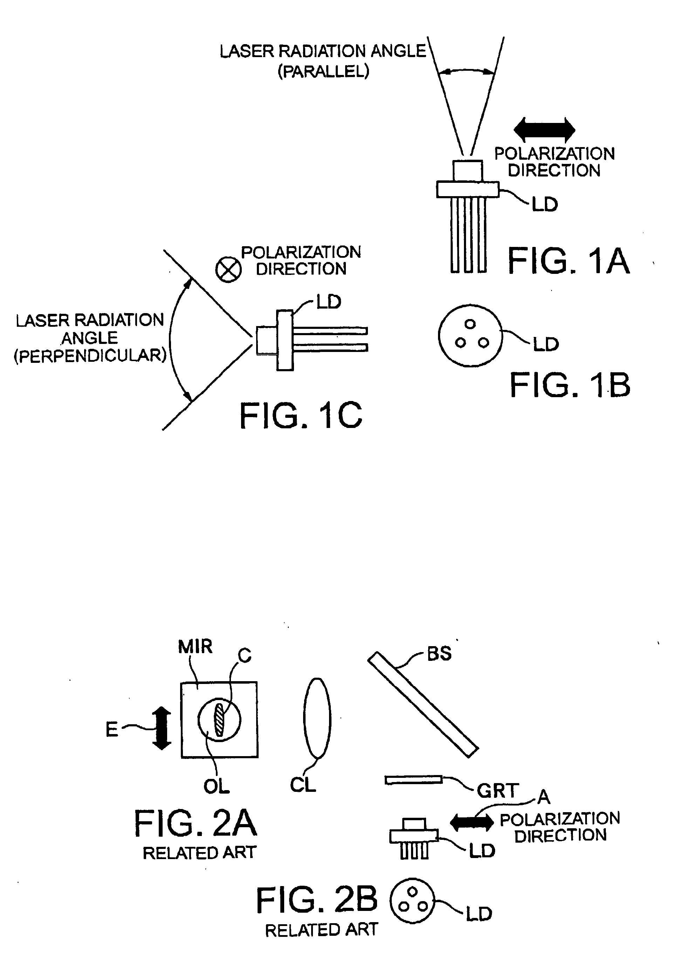

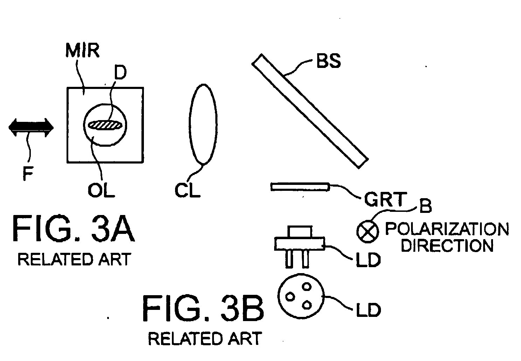

In the manner which will later be described in conjunction with Figs. 2A, 2B, 3A, and 3B, in existing optical pickup units, a direction of a major axis of a spot and a polarization direction of the laser beam are always identical with each other on the signal recording face of the optical disc converged by the objective lens. That is, an included angle between the direction of the major axis of the spot and the polarization direction of the laser beam on the signal recording face of the optical disc is always 0 degree.

### Summary of the Invention:

It has been appreciated by the present inventors that it would be useful to adjust the included angle arbitrarily. In other words, it would be desirable to change the polarization direction of the beam by an arbitrary angle.

It is therefore an object of at least the preferred embodiment of this invention to provide an optical pickup unit which is capable of adjusting an included angle between a direction of a major axis of a spot and a polarization direction of a laser beam on a signal recording face of an optical disc at any angle.

Other such objects of this invention will become clear as the description proceeds.

On describing the gist of this invention, it is possible to be understood that an optical pickup unit is for converging a laser beam having a predetermined polarization direction produced by a semiconductor laser on a signal recording face of an optical disc through an objective lens. According to an aspect of this invention, the optical pickup unit comprises a phase difference plate rotatably disposed before the objective lens around an optical axis and a rotation adjusting mechanism for mechanically rotating the phase difference plate around the optical axis by any angle. Therefore, it is possible to adjust an included angle between a direction of a major axis of a spot and a polarization direction of the laser beam on the signal recording face at any angle.

The afore-mentioned optical pickup unit, the phase difference plate may comprise a half-wave plate or a quarter-wave plate. In addition, the afore-mentioned optical pickup unit further may comprise a diffraction grating for separating the laser beam produced by the semiconductor laser into three laser beams, a beam splitter for reflecting the three laser beams from the diffraction grating into a first reflected laser beam, a collimator lens for collimating the first reflected laser beam into a collimated laser beam, and a rising mirror for reflecting the collimated laser beam into a second reflected laser beam. The objective lens converges the second reflected laser beam on the signal recording face of the optical disc. The phase difference plate is disposed at any position in an optical path between the semiconductor laser and the objective lens.

### Brief Description of the Drawing:

Preferred features of the present invention will now be described, by way of example only, with reference to the accompanying drawings, in which:-
Figs. 1A, 1B, and 1C are views collectively showing a semiconductor laser (laser diode) for use in an optical pickup unit;
Figs. 2A and 2B are views collectively showing an optical system of a first existing optical pickup unit;
Figs. 3A and 3B are views collectively showing an optical system of a second existing optical pickup unit;
Figs. 4A through 4C are views collectively showing an optical system of an optical pickup unit according to a preferred embodiment of this invention;
Figs. 5A and 5B collectively show vies for use in describing operation of the optical pickup unit illustrated in Figs. 4A through 4C; and
Fig. 6 is a perspective view of a half-wave plate used as a phase difference plate for use in the an optical pickup unit illustrated in Figs. 4A through 4C.

### Description of the Preferred Embodiment:

Referring to Figs. 1A, 1 B, and 1C, a semiconductor laser (laser diode) LD for use in an optical pickup unit will be described at first in order to facilitate an understanding of the present invention. Fig. 1A is a plan view of the semiconductor laser (laser diode) LD, Fig. 1 B is a front view of the semiconductor laser (laser diode) LD, and Fig. 1C is a left-hand side view of the semiconductor laser (laser diode) LD.

Irradiated by the semiconductor laser LD, a laser beam has a predetermined polarization direction. As shown in Figs. 1A and 1C, the polarization direction is a direction in parallel with an activation layer of the semiconductor laser LD. Irradiated by the semiconductor laser LD, the laser beam has an oval shape having a predetermined beam spreading angle. As shown in Fig. 1A and 1 C, the beam spreading angle is different from in a parallel direction and a perpendicular direction for the activation layer of the semiconductor laser LD. Specifically, the laser beam has a laser radiation angle which is small (narrow) in the parallel direction for the activation layer (see Fig. 1A) and which is large (wide) in the perpendicular direction for the activation layer (see Fig. 1C).

In the manner which will later be described in detail with reference to figures, in a conventional optical pickup unit using such as a semiconductor laser as a light source, the polarization direction of the laser beam is always identical with a direction of a major axis in a spot on a signal recording face of an optical disc on which the laser beam is converged through an objective lens.

Referring to Figs. 2A, 2B, 3A, and 3B, existing optical pickup units will be described in order to facilitate an understanding of the present invention. Figs. 2A and 2B are views collectively showing an optical system of a first existing optical pickup unit while Figs. 3A and 3B are views collectively showing an optical system of a second existing optical pickup unit. Fig. 2A is a plan view showing the whole of the optical system of the first existing optical pickup unit (except for a part of a photodetector or the like) while Fig. 2B is a front view showing the semiconductor laser LD for use in the first existing optical pickup unit. Fig. 3A is a plan view showing the whole of the optical system of the second existing optical pickup unit (except for a part of a photodetector or the like) while Fig. 3B is a front view showing the semiconductor laser LD for use in the second existing optical pickup unit.

While the first existing optical pickup unit (a first related art) and the second existing optical pickup unit (a second related art) are substantially similar in structure to each other, a method of disposing the semiconductor laser LD is different from each other. Accordingly, common matters between the first related art and the second related art will presently be described only as the existing optical pickup unit and only a case of requiring distinction will later be described by expressing the first existing pickup unit or the second existing pickup unit clearly.

The existing optical pickup unit comprises a semiconductor laser (laser diode) LD, a diffraction grating GRT, a beam splitter BS, a collimator lens CL, a rising mirror MIR, and an objective lens OL. Although illustration is not made in Figs. 2A and 3A, the existing optical pickup unit further comprises a concave lens (enlargement lens), a photodetector (light receiving element), and a forward sensor FS. In addition, the beam splitter BS will be referred to as a half mirror.

In the optical pickup unit with such a structure, disposed this side, the semiconductor laser LD radiates a laser beam in the horizontally forward direction. The outgoing laser beam is separated into three laser beams by the diffraction grating GRT and is bent at a right angle by the beam splitter BS to go horizontally leftward. In addition, the beam splitter BS separates the incident laser beam into a reflected beam and a transmitted beam at a constant ratio. For example, the beam splitter BS reflects 80% of the incident laser beam as the reflected beam and transmits 20% of the incident laser beam as the transmitted beam. The forward sensor (not shown) is also called a front monitor and is for monitoring a light amount of the transmitted beam from the beam splitter BS. The laser beam, which goes horizontally leftward, is collimated into a collimated beam by the collimator lens CL and thereafter is bent at a right angle by reflecting at a reflecting surface of the rising mirror MIR to go vertically upward. The laser beam, which goes vertically upward, is converged (irradiated) on a signal recording face of an optical disc (not shown) through the objective lens OL. Thereby, it is possible to write (record) information to the optical disc or erase information from the optical disc.

Reflected by the signal recording face of the optical disc, a reflected laser beam (return laser beam) goes vertically downward, passes through the objective lens OL, and is bent at a right angle by reflecting at the reflecting surface of the rising mirror MIR to go horizontally rightward. The laser beam, which goes horizontally rightward, is detected by the photodetector (not shown) through the collimator lens CL, the beam splitter BS, and the concave lens (not shown). Thereby, it is possible to reproduce information stored (recorded) in the optical disc.

In the manner which is described above, the beam splitter (half mirror) BS has a character (characteristic) which reflects a part of the incident laser beam and which transmits the remainder thereof. Accordingly, a part of the above-mentioned return laser beam is reflected by the beam splitter BS to return to the semiconductor laser LD. Specifically, on carrying out writing/erasing information to/from the optical disc, the semiconductor laser LD must irradiate the laser beam having a larger power in comparison with a case of carrying out reproduction of information. As a result, returned to the semiconductor laser LD by being reflected by the beam splitter BS, the laser beam has also a non-negligible power.

Referring now to Figs. 2A, 2B, 3A, and 3B, the description will proceed to differences between the first existing optical pickup unit and the second existing optical pickup unit.

In the first existing optical pickup unit illustrated in Figs. 2A and 2B, the semiconductor laser LD is arranged so that the polarization direction of the laser beam irradiated therefrom becomes a horizontal direction (extends right and left) within a drawing sheet of Fig. 2A in the manner which is depicted at an arrow A. In other words, the activation layer of the semiconductor laser LD has a direction in parallel with the drawing sheet of Fig. 2A.

On the other hand, in the second existing optical pickup unit illustrated in Figs. 3A and 3B, the semiconductor laser LD is arranged so that the polarization direction of the laser beam irradiated therefrom becomes a vertical direction (extends up and down) in regard to a drawing sheet of Fig. 3A in the manner which is depicted at B. In other words, the activation layer of the semiconductor laser LD has a direction perpendicular to the drawing sheet of Fig. 3A. That is, the semiconductor laser LD in the second existing optical pickup unit is arranged in a state where the semiconductor laser LD in the first existing optical pickup unit is rotated around its optical axis in a counterclockwise direction by an angle of 90 degrees.

In Figs. 2A and 3A, in a case where the semiconductor laser LD is arranged in the manner described above, a spot and a polarization direction of the laser beam on the signal recording surface of the optical disc converged by the objective lens OL are designated at an ellipse attached with hatching inside on the objective lens OL and an arrow close thereto, respectively.

In the first existing optical pickup unit, the above-mention spot has a major axis extending up and down within the drawing sheet of Fig. 2A in the manner which is depicted at C. As contrasted with this, in the second existing optical pickup unit, the above-mentioned spot has a major axis extending right and left within the drawing sheet of Fig. 3A in the manner which is depicted at D.

In the first existing optical pickup unit, the above-mentioned polarization direction of the laser beam on the signal recording face is a direction identical with the direction of the major axis of the above-mentioned spot as shown in an arrow E of Fig. 2A, namely, extends up and down within the drawing sheet of Fig. 2A. Likewise, in the second existing optical pickup unit, the above-mentioned polarization direction of the laser beam on the signal recording face is a direction identical with the direction of major axis of the above-mentioned spot as shown in an arrow F of Fig. 3A, namely, extends right and left within the drawing sheet of Fig. 3A.

At any rate, in the existing optical pickup units, it is understood that the direction of the major axis of the spot and the polarization direction of the laser beam are identical with each other on the signal recording face of the optical disc converged by the objective lens OL. This is because in the existing optical pickup units, the polarization direction of the laser beam irradiated by the semiconductor laser always becomes the direction in parallel the activation layer of the semiconductor laser.

In the manner which is described above, in the existing optical pickup units, the direction of the major axis of the spot and the polarization direction of the laser beam are always identical with each other on the signal recording face of the optical disc converged by the objective lens OL. That is, an included angle between the direction of the major axis of the spot and the polarization direction of the laser beam on the signal recording face of the optical disc is always 0 degree and it is therefore impossible to arbitrarily adjust the included angle, as mentioned in the preamble of the instant specification.

On the other hand, Japanese Unexamined Patent Publications Tokkai No. Hei 11-261171 or JP-A 11-261171 discloses an optical pickup unit capable of reducing return beam noises which generate caused by an event that a return beam is incident to a semiconductor laser (a laser element). In JP-A 11-261171, an optical element with a polarization rotation function is disposed in an optical path of the laser element. The optical element converts a polarization direction of the return beam to the laser element into a direction different from a polarization direction of an outgoing beam from the laser element. Specifically, the optical element converts the polarization direction of the return beam to the laser element into the direction obtained by rotating the polarization direction of the outgoing beam from the laser beam by 90 degrees. A quarter-wave plate is used as such an optical element.

However, JP-A 11-261171 uses the optical element such as a quarter-wave plate for converting the polarization direction of the return beam and a final object thereof is to reduce the return beam noises. In addition, conversion of the polarization direction by the optical element is set to a fixed angle after setting is made once and never adjusts the polarization direction to any angle. That is, JP-A 11-261171 never intends to adjust an included angle between a direction of a major axis of a spot and a polarization direction of a laser beam on a signal recording face of an optical disc to any angle.

In particular, it is thought in optical pickup units of the type described that interference in addition to the above-mentioned return beam noises may occur caused by various factors. Accordingly, it is preferably possible to arrange optical components (parts) at optimal positions by adjusting a polarization direction to any angle so as to eliminate such interference as much as possible.

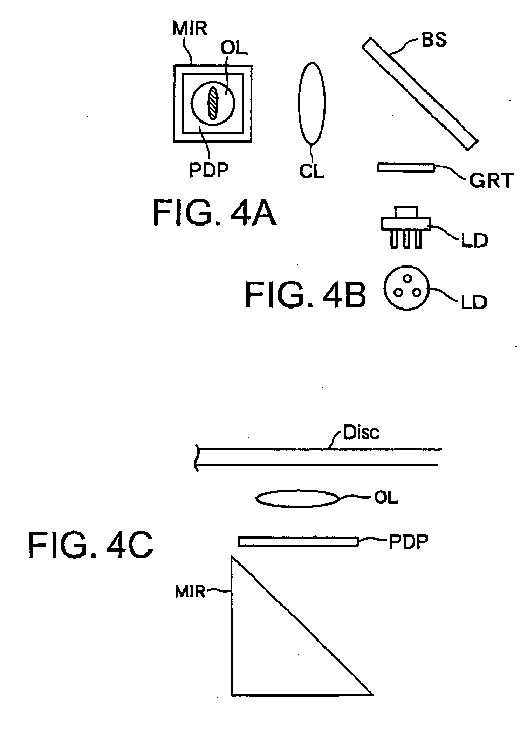

Referring to Figs. 4A, 4B, and 4C, the description will proceed to an optical pickup unit according to a preferred embodiment of this invention. Figs. 4A through 4C are views collectively showing an optical system of the optical pickup unit according to the preferred embodiment of this invention. Fig. 4A is a plan view showing the whole of the optical system of the optical pickup unit (except for a part of a photodetector or the like) according to the preferred embodiment of this invention. Fig. 4B is a front view showing a semiconductor laser LD for use in the optical pickup unit illustrated in Fig. 4A. Fig. 4C is a front view showing a part of the optical system of optical system of the optical pickup unit illustrated in Fig. 4A.

The illustrated optical pickup unit is similar in structure and operation to the first existing optical pickup unit illustrated in Figs. 2A and 2B except that the optical pickup unit further comprises a phase difference plate PDP for changing (rotating) a polarization direction of a laser beam and a rotation adjusting mechanism (not shown) for mechanically rotating the phase difference plate PDP around its optical axis by any angle. Accordingly, components having similar functions of those illustrated in Figs. 2A and 2B are attached with the same reference symbols and description thereof will be omitted in order to simplify description and to avoid repeated description. In Fig. 4C, a reference symbol of Disc designates an optical disc.

As is apparent from Fig. 4C, the phase difference plate PDP is disposed before the objective lens OL, namely, between the rising mirror MIR and the objective lens OL with the phase difference plate PDP rotatably around the optical axis. The phase difference plate PDP may be a half-wave plate or a quarter-wave plate which will later be described. The rotation adjusting mechanism (not shown) mechanically rotates the phase difference plate PDP around the optical axis by any angle.

By adding the phase difference plate PDP and the rotation adjusting mechanism to the optical pickup unit in the manner which is described above, the polarization direction of the laser beam on a signal recording face of the optical disc Disc is set in any angle while a major axis of a spot on the signal recording face of the optical disc Disc converged by the objective lens OL extends up and down within a drawing sheet of Fig. 4A in the similar manner in a case illustrated in Fig. 2A. That is, it is possible to adjust an included angle between a direction of the major axis of the spot and the polarization direction of the laser beam on the signal recording face of the optical disc Disc at the any angle.

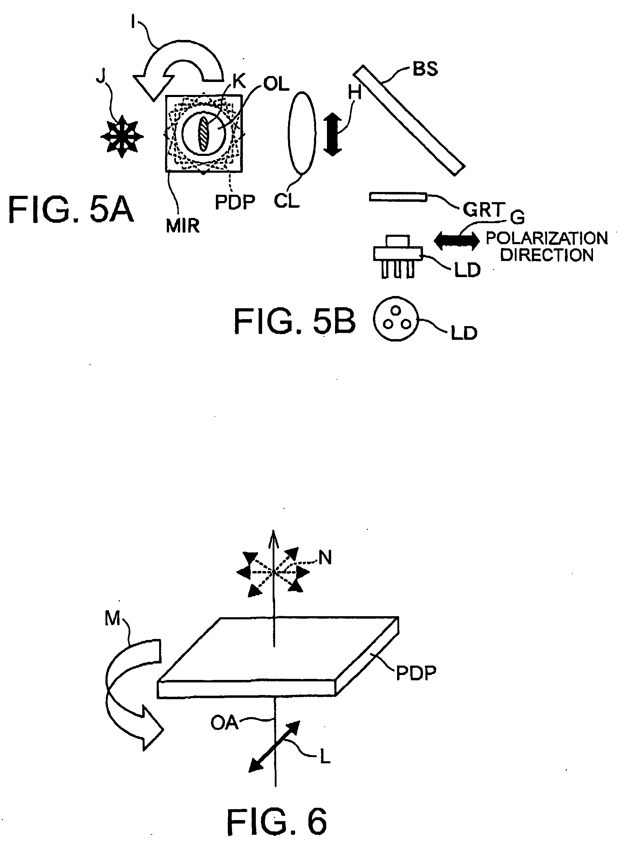

Referring now to Figs. 5A and 5B, description will be made as regards operation of the optical pickup unit illustrated in Figs. 4A through 4C. Fig. 5A is a plan view showing the whole of the optical system of the optical pickup unit (except for a part of the photodetector or the like) while Fig. 5B is a front view showing the semiconductor laser LD for use in the optical pickup unit illustrated in Fig. 5A.

Disposed this side, the semiconductor laser LD radiates a laser beam in a horizontally forward direction. The radiated laser beam has a polarization direction G which extends right and left within a drawing sheet of Fig. 5A in a similar manner in a case illustrated in Fig. 2A. The outgoing laser beam is separated into three laser beams by the diffraction grating GRT and is bent at a right angle by the beam splitter BS to go horizontally leftward. The laser beam, which goes horizontally leftward, has a polarization direction H which extends up and down within the drawing sheet of Fig. 5A. In addition, the beam splitter BS separates the incident laser beam into a reflected laser beam and a transmitted laser beam at a constant ratio. For example, the beam splitter BS reflects 80% of the incident laser beam as the reflected laser beam and transmits 20% of the incident laser beam as the transmitted laser beam. The forward sensor (not shown) monitors a light amount of the transmitted laser beam from the beam splitter BS.

The laser beam, which goes horizontally leftward, is collimated into a collimated laser beam by the collimator lens CL and thereafter is bent at a right angle by reflecting at a reflecting surface of the rising mirror MIR to go vertically upward. The laser beam, which goes vertically upward, has a polarization direction which is rotated by the phase difference plate PDP by a predetermined angle. By mechanically rotating the phase difference plate PDP using the rotation adjusting mechanism (not shown) around its optical axis in the manner shown at an outline thick arrow I in Fig. 5A, it is possible to rotate a polarization direction J of the laser beam passing through the phase difference plate PDP at any angle.

The laser beam, which transmits the phase difference plate PDP, is converged (irradiated) through the objective lens OL on the signal recording face of the optical disc Disc which is rotatably driven. Thereby, it is possible to write (record) information to the optical disc Disc or to erase information from the optical disc Disc.

As a result, in the manner which is described above, it is possible to adjust the included angle between a direction of the major axis K of the spot and the polarization direction J of the laser beam on the signal recording face of the optical disc Disc (Fig. 4C) by any angle.

Reflected by the signal recording face of the optical disc Disc (Fig. 4C), a reflected laser beam (return laser beam) goes vertically downward, passes through the phase difference plate PDP and the objective lens OL, and is bent at a right angle by reflecting at the reflecting surface of the rising mirror MIR to go horizontally rightward. The laser beam, which goes horizontally rightward, is detected by the photodetector (not shown) through the collimator lens CL, the beam splitter BS, and the concave lens (not shown). Thereby, it is possible to reproduce information stored (recorded) in the optical disc Disc (Fig. 4C).

Fig. 6 illustrates a half-wave plate used as the phase difference plate PDP. It will be assumed that the half-wave plate PDP is incident with linearly polarized light L bottom-to-top as shown in Fig. 6. By mechanically rotating the half-wave plate PDP around its optical axis in the manner depicted at an arrow M in Fig. 6, it is possible to voluntarily set a direction N of the linearly polarized light which passes through the half-wave plate PDP.

While this invention has thus far been described in conjunction with a preferred embodiment thereof, it will now be readily possible for those skilled in the art to put this invention into various other manners. For example, the phase difference plate may comprise a quarter-wave mirror in lieu of the half-wave plate. In addition, the phase difference plate may be disposed at any position of an optical path between a semiconductor laser and an objective lens.

While the present invention has been described in its preferred embodiments, it is to be understood that the words which have been used are words of description rather than limitation and that changes may be made to the invention without departing from its scope as defined by the appended claims.

Each feature disclosed in this specification (which term includes the claims) and/or shown in the drawings may be incorporated in the invention independently of other disclosed and/or illustrated features.

The text of the abstract filed herewith is repeated here as part of the specification.

In an optical pickup unit for converging a laser beam having a predetermined polarization direction produced by a semiconductor laser (LD) on a signal recording face of an optical disc (Disc) through an objective lens (OL), a phase difference plate (PDP) is rotatably disposed before the objective lens around an optical axis. A rotation adjusting mechanism mechanically rotates the phase difference plate around the optical axis by any angle. It is therefore possible to adjust an included angle between a direction of a major axis (K) of a spot and a polarization direction (J) of the laser beam on the signal recording face at any angle.

## Claims

1. An optical pickup unit for directing a laser beam having a predetermined polarization direction onto a face of an optical disc, comprising:
means for changing the polarization direction of the beam by an angle α; and
means for varying the angle α.

2. Apparatus according to Claim 1, wherein the means for varying the angle α is arranged to vary the angle α continuously over a predetermined range.

3. An optical pickup unit for converging a laser beam having a predetermined polarization direction produced by a semiconductor laser (LD) on a signal recording face of an optical disc (Disc) through an objective lens (OL), **characterised by**:
a phase difference plate (PDP) rotatably disposed before said objective lens around an optical axis (OA); and
a rotation adjusting mechanism for mechanically rotating said phase difference plate around the optical axis by any angle, thereby adjusting an included angle between a direction of a major axis (K) of a spot and a polarization direction (J) of the laser beam on said signal recording face at any angle.

4. An optical pickup unit as claimed in claim 3, wherein said phase difference plate comprises a half-wave plate.

5. An optical pickup unit as claimed in claim 3, wherein said phase difference plate comprises a quarter-wave plate.

6. An optical pickup unit as claimed in claim 3, wherein said optical pickup unit further comprises a diffraction grating (GRT) for separating said laser beam produced by said semiconductor laser into three laser bearns, a beam splitter (BS) for reflecting said three laser beams from said diffraction grating into a first reflected laser beam, a collimator lens (CL) for collimating the first reflected laser beam into a collimated laser beam, and a rising mirror (MIR) for reflecting the collimated laser beam into a second reflected laser beam, said objective lens (OL) converging the second reflected laser beam on the signal recording face of said optical disc, said phase difference plate (PDP) being disposed at any position in an optical path between said semiconductor laser and said objective lens.

7. A method comprising
directing a laser beam having a predetermined polarization direction onto a face of an optical disc;
changing the polarization direction of the beam by an angle α; and
varying the angle α.

8. A method according to Claim 7, wherein the angle α is continuously variable over a predetermined range.
